# EUROPEAN PATENT SPECIFICATION

(11) **EP 3 539 634 B1**
(45) Date of publication and mention of the grant of the patent: **23.03.2022**
(21) Application number: 17869223.2
(22) Date of filing: 23.10.2017
(51) Int. Cl.: B01D 3/00, B01D 3/02, B01D 3/38, B01D 5/00

(54) **DEVICE FOR EXTRACTING VOLATILE OILS CONTAINED IN ORGANIC RAW MATERIAL BY MEANS OF STEAM DISTILLATION AND INTERNAL DISTILLATION METHOD**
VORRICHTUNG ZUR EXTRAKTION VON FLÜCHTIGEN ÖLEN IN ORGANISCHEM ROHMATERIAL DURCH DAMPFDESTILLATION UND VERFAHREN ZUR INTERNEN DESTILLATION
DISPOSITIF D'EXTRACTION D'HUILES VOLATILES CONTENUES DANS UNE MATIÈRE PREMIÈRE ORGANIQUE PAR DISTILLATION PAR ENTRAÎNEMENT À LA VAPEUR ET PROCÉDÉ DE DISTILLATION INTERNE

(30) Priority: 10.11.2016 CL 20162865
(43) Date of publication of application: 18.09.2019
(73) Proprietor: Señoret Verdugo, Ramiro, Calera de Tango (CL)
(72) Inventor: Señoret Verdugo, Ramiro, Calera de Tango (CL)
(74) Representative: López Camba, Emilia
(86) International application number: PCT/CL2017/000032
(87) International publication number: WO 2018/085953

(56) References cited:
- WO-A1-2013/142827
- GB-A- 2 300 364
- US-A- 2 224 025
- US-A- 4 089 750
- US-A- 4 882 012
- US-A- 5 565 065
- US-A1- 2013 068 608

## Description

The invention relates to a modular steam distillation device and associated method of using it.

In the state of the art is known the document GB2300364 A, which discloses a low noise level distilling apparatus includes a stand , a condensing unit mounted on the stand and separated by a partition wall into an upper chamber which receives water from an external water source, and a bottom chamber for condensing steam into distilled water.

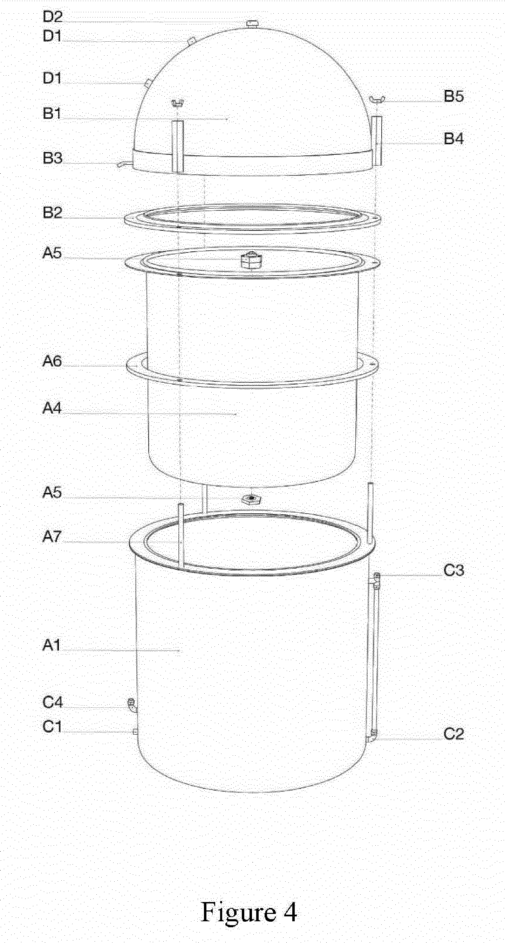

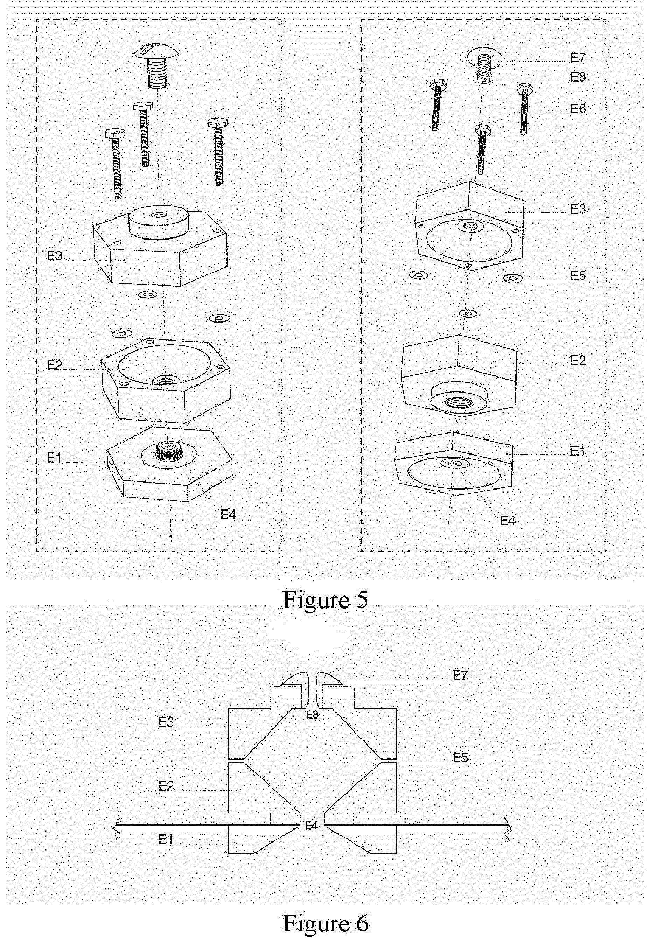

The distillation device disclosed in this application is formed by two independent manufacturing modules: See figure 4, device parts.

A.- The lower module of the device which integrates seven elements listed as follows:
1. Water boiler
2. Heat conduction disc
3. Steam heating chamber
4. Prime mater vessel or still
5. Steam flow ration valve
6. Gasket ring of the boiler
7. Fastening bolt

B.- The upper module of the device which integrates five elements listed as follows:
1. Mixed gases condensation lid
2. Distillate collector ring
3. Distillate evacuation tube
4. Fastening bolt supports
5. Wing nut

**A.- The description of the elements comprising the Lower Module of the device is as follows:**
A1.- The boiler (A1) of the device is formed by the space between a cylindrical vessel and another similar smaller vessel that is installed inside the first one so that it is suspended therein, both vessels are welded at its edge to a flat clamping ring of the same material, the outer diameter of this ring is slightly larger than the diameter of the larger vessel and has small stops welded to it's lower face for creating a vapor access slot from the boiler (A1) to the steam heating chamber (A3).
A2.- The heat conducting disc (A2) is a section of a round metal bar which is welded to the center of the double bottom of the boiler(A1), the function of the disc (A2) is that of conducting heat from the heat unit (stove) to the bottom of the steam heating chamber (A3) through the double bottom of the boiler (A1). The disc (A2) stays in contact with both sides of the bottom of said boiler (A1) for heating the steam of water which arrives at the bottom of said chamber (A3) located just above the boiler (A1).
A3.- The steam heating chamber (A3) of the device conforms through the incorporation of a third vessel, the still (A4) for raw material, which is installed inside the boiler (A1). The space between said boiler (A1) and said still (A4) constitutes said chamber (A3).
A4.- The vessel for raw material or still (A4) consists of the third vessel mentioned above, it is installed in such a way that stays suspended inside and supported on the boiler (A1) by means of a clamping ring welded to the mouth edge of this vessel, it has the same outer diameter of the ring to be over the mouth of the boiler (A1). At the bottom of the still (A4) and in it's center there is a drilling connecting said chamber (A3) with the still (A4) and makes it possible to install an open valve (A5) for rationing the steam flow, which leads the passage of steam up to the raw material.
A5.- The rationing valve for rationing the flow rate of steam is a metal part of three hexagonal short logs (E1, E2 and E3, respectively) all with a conical casting on one of its sides and screwed onto one another. The first two logs (E1) and (E2) are joined at the opposite side of the casting and the third (E3) is installed with its empty side opposite the empty side of the second (E2). A hole (E4) is drilled in the axis of the first (E1) and second trunk (E2), which allows the passage of the steam. The lower log (E1) of the valve (A5) is located in the center of the bottom of the still (A4) with it's conical casting downwards, the second trunk (E2) is located at the center of the bottom on the inside of the still (A4) with its conical cavity upward. The third trunk (E3) (or cap of the valve) is slightly separated from the second trunk (E2) by small ruffs (E5) located in three peripheral screws (E6) which serve as fixing between both second (E2) and third (E3) trunks. The thickness of these ruffs determines the volume of the flow of steam passing into the still (A4) and is injected horizontally into its interior. The upper side of the third trunk carries an insert of a screw (E7) on its axis, said screw has a small hole (E8) which rations the volume of the flow of steam that is injected vertically into the interior of the still (A4). Both the drilling of the first body of the valve (E1) and that of the upper screw resembling small Venturi type vacuum tubes.
A6.- Over the edge of the mouth of the boiler (A1) and under the clamping ring of the chamber (A4) an elastic gasket (A6) is installed in the form of a ring which hermetically seals the joint between said boiler (A1) and the lid (B1), preventing the losses of steam from the boiler (A1).
A7.- The fixing pins (A7) are three and are equidistant from each other, they are welded in a vertical position on the ring of the boiler (A1), its function is to firmly join both modules; the lid (B1) and the boiler (A1) of the device.

### Additional elements installed in the lower module (A) of the distiller:

1. Threaded fitting terminal for a boiler water feeding tap (A1).
2. Threaded fitting terminals, tee & 90° curve for transparent tube installation of the hot water level meter.
3. Threaded fitting terminal for the installation of a steam thermometer.
4. Threaded curve fitting for steam pressure safety valve installation.

On the outside of the boiler (A1) it disposes all the terminals necessary for the installation of; water inlet and outlet hoses (C1), water level meter (C2), water thermometer (C3), safety valve for excess steam pressure (C4).

### B.- The description of the elements which make up the upper module (B) of the equipment is as follows:

B1.- The condenser lid (B1) of the distiller consists of a vessel with the form of a half sphere and another with a conical shape with an inclination angle of 45° or less (measured from a vertical line), both vessels having approximately the same height and diameter on the base, they are fixed to each other at both the apical end and the base. The half sphere is above and the cone inserted below and inside of it. This assembly is located over the boiler (A1) and plays the role of cover of the device. In the event that the distiller is constructed with metal vessels, this structure can be reinforced by means of a cylindrical metal belt of greater thickness in which the edge of said cover is welded and serves as the assembly and base of the lid (B1). The space comprised between both vessels (half sphere and cone) constitutes the volume of the cold water chamber and its capacity is determined by the volumetric difference between both elements. The inside face of the cone of the lid (B1) is the condensing surface of the distiller and stays in direct contact with the mixed gases emanating from the still (A4). The inclined angle of its sides allows continuous leakage of the distilled liquid to the collection ring (B2) by gravity force.
B2.- The distillate collection ring (B2) is a silicone element or the like which is placed between the still (A4) and the lid (B1) of the device, the conical shape it acquires allows the collection of the distilled liquid coming down from the condensing cone of the lid (B1). This ring in turn serves a sealing gasket function between the lid (B1) and the still (A4) of the device, preventing the flushing of distilled liquid on the side of the distiller.
B3.- The distilled liquid exits the device through an evacuating tube (B3) which's main shaft has a radial direction with a slight downward inclination. It is inserted over the edge of the lid (B1) across it.
B4.- The fixing dices are three cylindrical logs drilled through their axis which are welded in a vertical position equidistant from each other to the underside of the lid (B1). They are aligned with the fixing pins (A7) of the boiler (A1) which pass through them when the lid is installed.
B5.- The butterfly nuts (B5) which are screwed to each of the fixing pins (A7) of the boiler (A1) when the lid B1) of the device is closed.

Additional elements which are installed in the Upper Module (B) of the device:
1. Threaded terminal fitting for fixing inlet and outlet hoses for cold water.
2. Threaded terminal fitting for a thermometer installation to monitor the temperature of mixed gases, also permits the eventual installation of a second condenser over the lid (B1) of the device for fractional distillation.

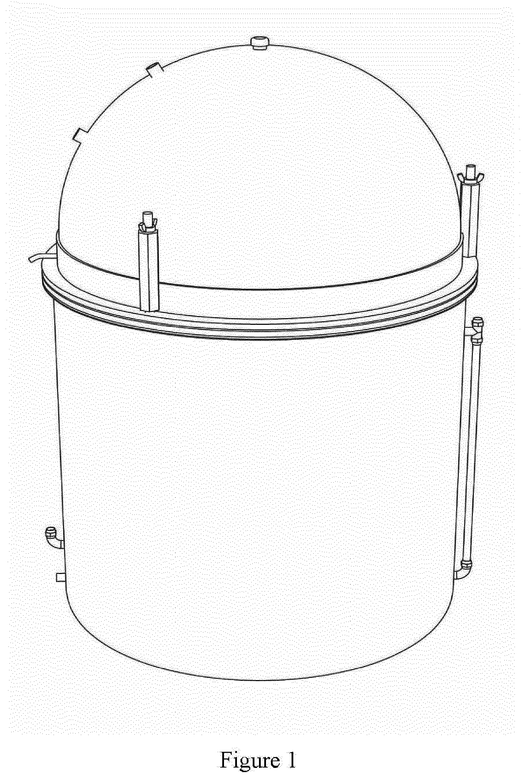

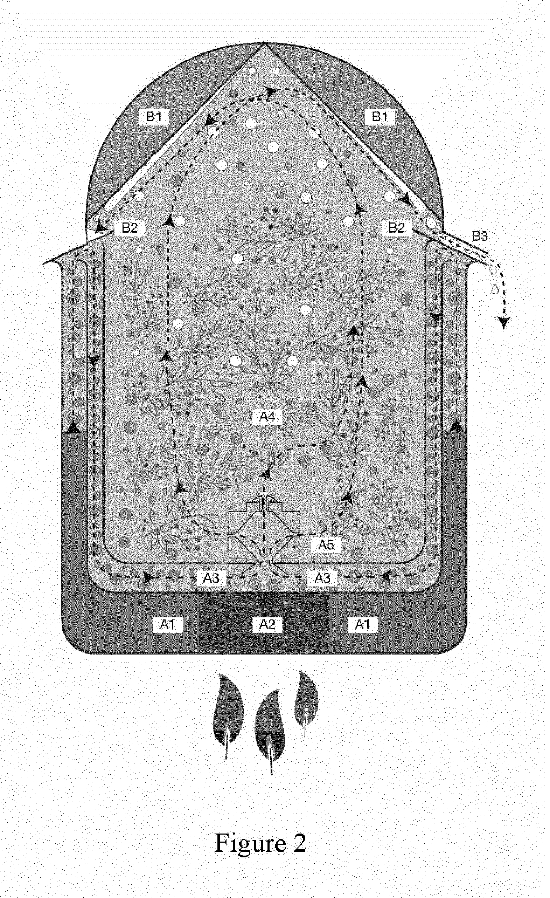

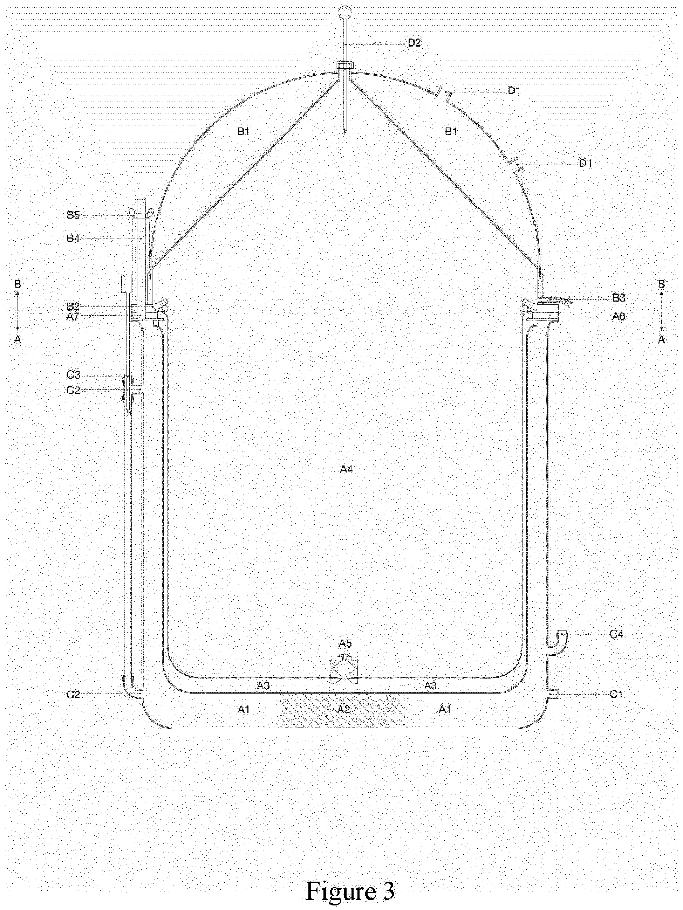

Complete circuit and dynamics of steam, mixed gases and liquid distillate during distillation. See figure 2, flow diagram of internal distillation
1. The steam is produced by evaporation of the water that was deposited in the boiler (A1) and was heated by the stove which is located under the device.
2. The steam ascends by the inner side of the boiler (A1) and then descends by the external side of the still (A4) to the bottom of the steam heating chamber (A3).
3. The steam is reheated by coming into contact with the upper face of the bottom of the boiler (A1) and expands, acquiring pressure.
4. The pressurized steam passes through the valve (A5) and is projected into the chamber of the raw material (A4).
5. The steam rises through the raw material "drawing" the gases from the essential oils containing it.
6. Mixed gases of steam and essential oil emanate over the raw material and are suspended in the upper end of the still (A4).
7. The mixed gases make contact with the cone of the lid (B1) the surface of which is cold and thus the condensation of the mixed gases occurs.
8. The distilled liquid runs down the cone of the lid (B1) to the collection ring (B2) where it accumulates.
9. The accumulated liquid circulates (by gravity) along the collector ring (B2) to the evacuation tube (B3).
10. The distilled liquid is evacuated from the interior of the device through the evacuation tube (B3) and is conducted by tubing to the oil water separator flask.

## Claims

1. Modular steam distillation device for the extraction of volatile substances contained in raw materials of organic or inorganic nature, the upper module of said device disposes a double-walled condenser cover (B1) that allows the circulation of cold water inside of it, the lower module of said device is installed over a stove and is **CHARACTERIZED in that** it includes three cylindrical vessels arranged successively one inside the other, in such a way that the space between the external vessel and the intermediate vessel forms the boiler (A1), in the center of the bottom of said boiler (A1) there is a solid heat conducting disk (A2) that conducts heat from said conducting disk (A2) to the base of said chamber (A3) across the boiler (A1), the space comprised between the intermediate vessel and the internal vessel forms a chamber (A3) of steam over-heating, and the space of the internal vessel forms an oven (A4) for installation of solid raw material to distill, the device has an open valve (A5) for dosing and direction of the steam flow from said chamber (A3) towards the inside of said still (A4), said valve (A5) is located crossing the center of the bottom of the still (A4), between the lower edge of the lid (B1) and the upper edge of the still (A4) a flat elastic ring (B2) for hermetical closure of both modules of the distiller is disposed, said ring (B2) also serves for the internal collection of the liquid distillate that is evacuated from the device by means of an evacuation tube (B3) located at the lower edge of the lid (B1), additionally along the entire upper internal edge of the boiler (A1) it has a slot that allows the passage of steam from the boiler (A1) to the steam chamber (A3) and on the outside of the lid (B1) it has the threaded terminal fittings necessary for the installation of cold water inlet and outlet hoses (D1) and mixed gas thermometer (D2).

2. Steam distillation device according to claim 1, **CHARACTERIZED in that** the valve (A5) is formed by three solid trunks conically emptied at one of their ends and screwed one on top of the other.

3. Steam distillation device according to claim 1, **CHARACTERIZED in that** an elastic gasket (A6) is provided for hermetical closure of the boiler (A1), said gasket is located on the upper edge of the boiler (A1 ) and has a flat ring shape.

4. Steam distillation device according to claim 1, **CHARACTERIZED in that** on the underside of the lid (B1) there is a conical surface that allows the internal condensation of mixed gases.

5. Steam distillation device according to the preface of claim 1, CHARACTERIZED because the lid (B1), at its apex, has a threaded terminal fitting that allows the installation of a thermometer and can be used to put together an additional condenser for fractional distillation.

6. Steam distillation device according to claim 1, CHARACTERIZED because the force required for a hermetical closure of the boiler (A1), the oven (A4) and the lid (B1) is exerted by three bolt-type fasteners which are located equidistantly one of the other on the sides of the device.

7. Steam distillation device according to claim 1, CHARACTERIZED because on the outer side of the boiler (A1) it disposes the threaded terminal fittings (C1) necessary for the installation of; hoses for feeding and evacuating water from the boiler (A1) located on the lower and upper side of said boiler (A1), water level meter (C2) of said boiler (A1), transparent glass tube to measure the level of water from said boiler (A1), water thermometer (C3) from said boiler (A1) and safety valve for eventual excess steam pressure (C4).

8. Method of internal steam distillation for extraction of volatile oils present in organic matter carried out by means the steam distillation device claimed in any of the claims 1 to 7, CHARACTERIZED because they develop, in situ, within the single body of said device, each and every one of the following functions of said extraction process, which are listed below:
• generate dry steam in the boiler (A1),
• provide boiling water at low temperature approximately between 60 and 85 ° C,
• conduct heat from a stove to the steam heating chamber (A3) by means of a heat conducting disk (A2) located inside the device
• Internally reheat the steam in said chamber (A3) to approximately between 110 - 115 ° C.
• inject, dose and sprinkle the pressured steam flow entering the furnace (A4) through the valve (A5) of the device,
• preheat and temper the oven (A4) and also the raw material contained in it,
• volatilize the aromatic oils contained in the raw material and "drag" the mixed gases from the oven (A4) to the lid (B1),
• cool the internal space of the lid (B1) by means of cold water,
• condensate the mixed gases in contact with the cone of the lid (B1),
• drain the distilled liquids from the lid (B1) to the collector ring (B2),
• collect the distilled liquid and drive it to the evacuation tube (B3),
• evacuate the distilled liquid from the device through the evacuation tube (B3).

## Patentansprüche

1. Modulare Dampfdestillationsvorrichtung zur Extraktion von flüchtigen Stoffen, die in Rohstoffen organischer oder anorganischer Natur enthalten sind, wobei das obere Modul der Vorrichtung einen doppelwandigen Kondensatordeckel (B1) aufweist, der die Zirkulation von kaltem Wasser in seinem Inneren ermöglicht, das untere Modul der Vorrichtung über einem Ofen installiert ist und **DADURCH GEKENNZEICHNET ist, dass** sie drei zylindrische Behälter umfasst, die hintereinander ineinander angeordnet sind, so dass der Raum zwischen dem externen Behälter und dem Zwischenbehälter den Kessel (A1) bildet, in der Mitte des Bodens des Kessels (A1) eine feste Wärmeleitscheibe (A2) vorhanden ist, die Wärme von der Leitscheibe (A2) zum Boden der Kammer (A3) über den Kessel (A1) leitet, der Raum zwischen dem Zwischenbehälter und dem Innenbehälter eine Kammer (A3) zur Dampfüberhitzung bildet und der Raum des Innenbehälters einen Ofen (A4) zum Installieren von festem Rohmaterial zum Destillieren bildet, die Vorrichtung ein offenes Ventil (A5) zum Dosieren aufweist und Richtung des Dampfstroms von der Kammer (A3) zum Inneren des Destillators (A4) hin angeordnet ist, wobei das Ventil (A5) die Mitte des Bodens des Destillators (A4) kreuzt, wobei zwischen dem unteren Rand des Deckels (B1) und dem oberen Rand des Destillators (A4) ein flacher elastischer Ring (B2) zum hermetischen Verschließen beider Module des Destillators angeordnet ist, wobei der Ring (B2) auch zum internen Sammeln des flüssigen Destillats dient, das aus der Vorrichtung mittels eines Evakuierungsrohrs (B3) evakuiert wird, das am unteren Rand des Deckels (B1) angeordnet ist, zusätzlich entlang des gesamten oberen inneren Randes des Kessels (A1) einen Schlitz aufweist, der den Durchgang von Dampf vom Kessel (A1) zur Dampfkammer (A3) ermöglicht, und auf der Außenseite des Deckels (B1) die Gewindeanschlussstücke aufweist, die für die Installation von Kaltwassereinlass- und -auslassschläuchen (D1) und Mischgasthermometer (D2) erforderlich sind.

2. Dampfdestillationsvorrichtung nach Anspruch 1, **DADURCH GEKENNZEICHNET, dass** das Ventil (A5) aus drei festen Stämmen gebildet ist, die an einem ihrer Enden konisch entleert und aufeinandergeschraubt sind.

3. Dampfdestillationsvorrichtung nach Anspruch 1, **DADURCH GEKENNZEICHNET, dass** zum hermetischen Verschließen des Kessels (A1) eine elastische Dichtung (A6) vorgesehen ist, die am oberen Rand des Kessels (A1 ) angeordnet ist und eine flache Ringform aufweist.

4. Dampfdestillationsvorrichtung nach Anspruch 1, **DADURCH GEKENNZEICHNET, dass** an der Unterseite des Deckels (B1) eine konische Oberfläche vorgesehen ist, die die innere Kondensation von Mischgasen ermöglicht.

5. Dampfdestillationsvorrichtung nach dem Vorwort von Anspruch 1, **DADURCH GEKENNZEICHNET, dass** der Deckel (B1) an seiner Spitze eine Gewindeanschlussarmatur aufweist, die den Einbau eines Thermometers ermöglicht und dazu verwendet werden kann, einen zusätzlichen Kondensator für die fraktionierte Destillation zusammenzustellen.

6. Dampfdestillationsvorrichtung nach Anspruch 1, **DADURCH GEKENNZEICHNET, dass** die zum hermetischen Verschließen des Kessels (A1), des Ofens (A4) und des Deckels (B1) erforderliche Kraft von drei Bolzenbefestigern ausgeübt wird, die auf den Seiten der Vorrichtung äquidistant zueinander angeordnet sind.

7. Dampfdestillationsvorrichtung nach Anspruch 1, **DADURCH GEKENNZEICHNET, dass** sie auf der Außenseite des Kessels (A1) die mit Gewinde versehenen Anschlussstücke (C1) anordnet, die für die Installation erforderlich ist von Schläuchen zum Zuführen und Abführen von Wasser aus dem Kessel (A1), der sich auf der unteren und oberen Seite des Kessels (A1) befindet, einem Wasserstandsmesser (C2) des Kessels (A1), einem transparenten Glasrohr zum Messen des Wasserstands aus dem Kessel (A1), einem Wasserthermometer (C3) aus dem Kessel (A1) und einem Sicherheitsventil für einen eventuellen Dampfüberdruck (C4).

8. Verfahren zur internen Wasserdampfdestillation zur Extraktion von flüchtigen Ölen in organischem Rohmaterial mit Hilfe der Wasserdampfdestillationsvorrichtung nach einem der Ansprüche 1 bis 7, **DADURCH GEKENNZEICHNET, DASS** sie in situ innerhalb des einzelnen Körpers der Vorrichtung jede der folgenden Funktionen des Extraktionsverfahrens entwickeln, die nachstehend aufgeführt sind:
- Erzeugen von trockenem Dampf im Kessel (A1),
- Bereitstellen von kochendem Wasser bei niedriger Temperatur zwischen etwa 60 und 85 °C,
- Leiten von Wärme von einem Ofen zu der Dampfheizkammer (A3) mittels einer wärmeleitenden Scheibe (A2), die sich im Inneren des Geräts befindet,
- Erhitzen des Dampfes in der Kammer (A3) intern auf etwa 110 bis 115 °C.
- Einspritzen, Dosieren und Streuen des unter Druck stehenden Dampfstroms, der durch das Ventil (A5) der Vorrichtung in den Ofen (A4) eintritt,
- Vorheizen und Temperieren des Ofens (A4) und des darin enthaltenen Rohmaterials,
- Verflüchtigen der im Rohmaterial enthaltenen aromatischen Öle und "Abziehen" der gemischten Gase vom Ofen (A4) zum Deckel (B1),
- Kühlen des Innenraums des Deckels (B1) mit kaltem Wasser,
- Kondensieren der gemischten Gase in Kontakt mit dem Konus des Deckels (B1),
- Ablassen der destillierten Flüssigkeiten vom Deckel (B1) zum Sammelring (B2),
- Auffangen der destillierten Flüssigkeit und deren Befördern zum Evakuierungsrohr (B3),
- Ablassen der destillierten Flüssigkeit durch das Evakuierungsrohr (B3) aus dem Gerät.

## Revendications

1. - Dispositif modulaire de distillation de vapeur pour l'extraction de substances volatiles contenues dans des matières premières de nature organique ou inorganique, le module supérieur dudit dispositif disposant d'un couvercle condenseur (B1) à double paroi permettant la circulation d'eau froide à l'intérieur de celui-ci, le module inférieur dudit dispositif étant installé sur une cuisinière et étant **CARACTÉRISÉ en ce qu'**il comporte trois cuves cylindriques disposées successivement l'une à l'intérieur de l'autre, de telle sorte que l'espace entre la cuve externe et la cuve intermédiaire forme la chaudière (A1), au centre du fond de ladite chaudière (A1) se trouve un disque conducteur de chaleur solide (A2) qui conduit la chaleur dudit disque conducteur (A2) à la base de ladite chambre (A3) à travers la chaudière (A1), l'espace compris entre la cuve intermédiaire et la cuve interne forme une chambre (A3) de surchauffe de la vapeur, et l'espace de la cuve interne forme un four (A4) pour l'installation de la matière première solide à distiller, le dispositif a une vanne ouverte (A5) pour le dosage et direction du flux de vapeur de ladite chambre (A3) vers l'intérieur dudit alambic (A4), ladite vanne (A5) étant située en face du centre du fond de l'alambic (A4), entre le bord inférieur du couvercle (B1) et le bord supérieur de l'alambic (A4), une bague élastique plate (B2) pour la fermeture hermétique des deux modules du distillateur est disposée, ladite bague (B2) sert également à la collecte interne du distillat liquide qui est évacué du dispositif au moyen d'un tube d'évacuation (B3) situé au niveau du bord inférieur du couvercle (B1), en outre, le long de tout le bord interne supérieur de la chaudière (A1), elle comporte une fente qui permet le passage de la vapeur de la chaudière (A1) vers la chambre de vapeur (A3), et à l'extérieur du couvercle (B1), elle comporte les raccords terminaux filetés nécessaires à l'installation de tuyaux d'entrée et de sortie d'eau froide (D1) et d'un thermomètre de gaz mélangés (D2).

2. - Dispositif de distillation de vapeur selon la revendication 1, **CARACTÉRISÉ en ce que** la vanne (A5) est formée par trois troncs pleins évidés coniquement à l'une de leurs extrémités et vissés l'un sur l'autre.

3. - Dispositif de distillation de vapeur selon la revendication 1, **CARACTÉRISÉ en ce qu'**un joint élastique (A6) est prévu pour la fermeture hermétique de la chaudière (A1), ledit joint étant situé sur le bord supérieur de la chaudière (A1 ) et ayant une forme annulaire plate.

4. - Dispositif de distillation de vapeur selon la revendication 1, **CARACTÉRISÉ en ce que** sur la face inférieure du couvercle (B1) se trouve une surface conique qui permet la condensation interne de gaz mélangés.

5. - Dispositif de distillation de vapeur selon la préface de la revendication 1, **CARACTÉRISÉ en ce que** le couvercle (B1) présente à son sommet un embout terminal fileté qui permet l'installation d'un thermomètre et peut être utilisé pour assembler un condenseur supplémentaire pour la distillation fractionnée.

6. - Dispositif de distillation de vapeur selon la revendication 1, **CARACTÉRISÉ en ce que** la force requise pour une fermeture hermétique de la chaudière (A1), du four (A4) et du couvercle (B1) est exercée par trois fixations de type boulon qui sont situées à équidistance l'une de l'autre sur les côtés du dispositif.

7. - Dispositif de distillation de vapeur selon la revendication 1, **CARACTÉRISÉ en ce que**, sur le côté extérieur de la chaudière (A1), il dispose les raccords terminaux filetés (C1) nécessaires à l'installation : des tuyaux pour alimenter et évacuer l'eau de la chaudière (A1) situés sur les côtés inférieur et supérieur de ladite chaudière (A1), un compteur de niveau d'eau (C2) de ladite chaudière (A1), un tube en verre transparent pour mesurer le niveau d'eau de ladite chaudière (A1), un thermomètre d'eau (C3) de ladite chaudière (A1) et une soupape de sécurité pour une éventuelle surpression de vapeur (C4).

8. - Procédé de distillation interne de vapeur pour l'extraction d'huiles volatiles présentes dans la matière organique réalisé au moyen du dispositif de distillation de vapeur selon une quelconque revendication 1 à 7, **CARACTÉRISÉ en ce qu'**il développe, in situ, dans le corps unique dudit dispositif, chacune des, et toutes les fonctions suivantes dudit procédé d'extraction, énumérées ci-dessous :
- générer de la vapeur sèche dans la chaudière (A1),
- fournir de l'eau bouillante à basse température entre 60 et 85°C environ,
- conduire la chaleur d'un four à la chambre de chauffage à vapeur (A3) au moyen d'un disque conducteur de chaleur (A2) situé à l'intérieur du dispositif
- Réchauffer intérieurement la vapeur dans ladite chambre (A3) à une température comprise entre 110 et 115°C environ.
- injecter, doser et saupoudrer le flux de vapeur sous pression entrant dans le four (A4) par la vanne (A5) du dispositif,
- préchauffer et tempérer le four (A4) ainsi que la matière première qu'il contient,
- volatiliser les huiles aromatiques contenues dans la matière première et « entraîner » les gaz mélangés du four (A4) vers le couvercle (B1),
- refroidir l'espace intérieur du couvercle (B1) au moyen d'eau froide,
- condenser les gaz mélangés en contact avec le cône du couvercle (B1),
- vidanger les liquides distillés du couvercle (B1) vers la bague collectrice (B2),
- collecter le liquide distillé et l'acheminer vers le tube d'évacuation (B3),
- évacuer le liquide distillé du dispositif par le tube d'évacuation (B3).
